# EUROPÄISCHE PATENTSCHRIFT

(11) **EP 2 944 177 B1**
(45) Veröffentlichungstag und Bekanntmachung des Hinweises auf die Patenterteilung: **27.02.2019**
(21) Anmeldenummer: 15401041.7
(22) Anmeldetag: 05.05.2015
(51) Int. Cl.: A01C 17/00

(54) **SCHLEUDERDÜNGERSTREUER**
CENTRIFUGAL SPREADER FOR FERTILIZER
ÉPANDEUR D'ENGRAIS CENTRIFUGE

(30) Priorität: 14.05.2014 DE 102014106764
(43) Veröffentlichungstag der Anmeldung: 18.11.2015
(73) Patentinhaber: Amazonen-Werke H. Dreyer GmbH & Co. KG, 49205 Hasbergen (DE)
(72) Erfinder: Scheufler, Bernd, 49205 Hasbergen (DE); Ehlen, Volker, 49205 Hasbergen (DE); Johannaber, Stefan Jan, 49536 Lienen (DE)

(56) Entgegenhaltungen:
- EP-A2- 0 988 780
- DE-A1- 4 433 475
- DE-U1-202008 001 676

## Beschreibung

Die Erfindung betrifft einen Schleuderdüngerstreuer mit den Merkmalen des Oberbegriffs von Anspruch 1 und ein Verfahren für einen Schleuderdüngerstreuer mit den Merkmalen des Oberbegriffs von Anspruch 7.

Ein derartiger Schleuderdüngerstreuer mit verstellbarer Grenzstreueinrichtung ist beispielsweise aus der EP 0 988 780 A2 bekannt. Der Dünger gelangt aus einem Vorratsbehälter durch eine Dosieröffnung auf eine Schleuderscheibe mit Wurfschaufeln, die um eine vertikale Achse rotiert. Durch die dabei auftretenden Fliehkräfte wird der Dünger in einem Streufächer auf dem Feld verteilt. Um den Streufächer in seiner Arbeitsbreite einseitig für die Düngung entlang einer Feldgrenze einzuschränken, weist der Schleuderdüngerstreuer eine verstellbare Grenzstreueinrichtung auf, mit der bei Bedarf die Flugbahn des Düngers am äußeren Bereich des Streufächers von der Feldgrenze weggelenkt wird. Die Ablenkung des Düngers erfolgt durch vertikal ausgerichtete Leitflächenelemente, die zunächst parallel zur Flugrichtung des von der Schleuderscheibe abgeworfenen Düngers ausgerichtet sind und dann über eine Krümmung die Flugbahn ändern.

Die Grenzstreueinrichtung lässt sich für das Grenzstreuen entlang einer Feldgrenze zu einem Weg oder zu einem Graben bzw. für das Randstreuen entlang einer Feldgrenze zu einem Nachbarfeld einsetzen. Dadurch ist eine genaue Düngerablage entlang der Feldgrenze möglich.

In der EP 0 578 988 B2 wird eine Vorrichtung zum Ausbringen von landwirtschaftlichem Material, wie beispielsweise Dünger, vorgeschlagen, bei der die Dosierorgane auf Basis eines Positionsgebers und einer gespeicherten Karte automatisch an den Feldgrenzen bzw. bei der Ein- und Ausfahrt ins Vorgewende ein- oder ausgeschaltet werden. Üblicherweise wird bei derartigen Schleuderdüngerstreuern der Dünger bis hin zu den beiden benachbarten Fahrgassen, also über zwei Arbeitsbreiten hinweg, verteilt. Dadurch wird der Feldbereich zwischen zwei Fahrgassen von beiden Seiten her bedüngt, wodurch die Verteilung des Düngers besonders gleichmäßig ist.

Aus der DE 20 2008 001 676 U1 ist eine Maschine zum Fliehkraftstreuen bekannt, bei der die Breite des Streuspektrums durch Lamellen einer Flussausrichtereinheit verstellbar ist.

Aus der DE 44 33 475 A1 ist ein Zentrifugaldüngerstreuer mit einer Grenzstreueinrichtung zur Erzeugung eines Streubildes mit einer zur Grenze steil abfallenden Streustärke und zur Begrenzung der Wurfweite der Düngerpartikel bis zur Grenze bekannt.

Nachteilig bei den bekannten Schleuderdüngerstreuern ist, dass es beispielsweise in Übergangsbereichen, wie bei der Ein- und Ausfahrt in das Vorgewende oder bei der Umfahrung von Hindernissen, lokal zu einer Unter- oder Überdüngung kommen kann, da sich dort die Streufächer aus schräg zueinander verlaufenden Fahrgassen in ungünstiger Weise überlappen.

Aufgabe der vorliegenden Erfindung ist es daher, einen Schleuderdüngerstreuer und ein Verfahren für einen Schleuderdünger bereitzustellen, mit dem eine gleichmäßigere Düngung möglich ist.

Zur Lösung dieser Aufgabenstellung stellt die Erfindung einen Schleuderdüngerstreuer mit den Merkmalen des Anspruchs 1 und ein Verfahren gemäß dem Anspruch 7 bereit. Vorteilhafte Ausführungsformen sind in den Unteransprüchen genannt.

Durch die parallel zum Feld ausgerichtete Schleuderscheibe entsteht ein horizontal ausgerichteter Streufächer. In diesen stehen die im Wesentlichen vertikal ausgerichteten Leitflächenelemente hinein und leiten den Dünger kanalartig um. Dadurch, dass wenigstens ein Teil der Leitflächenelemente vertikal mit unterschiedlichen Umlenkwinkeln ausgebildet ist, können diese durch die Verstellbarkeit der Grenzstreueinrichtung unterschiedlich weit in den Streufächer eingestellt werden. Dadurch kommt der Streufächer je nach Verstellung mit den unterschiedlichen Umlenkwinkeln der Leitflächenelemente in Kontakt und wird dementsprechend unterschiedlich umgelenkt. Anders ausgedrückt kann also durch die vertikal unterschiedlichen Umlenkwinkel die Arbeitsbreite des Schleuderdüngerstreuers eingestellt werden.

Dadurch kann in einem Teilbreitenstreubetrieb die Arbeitsbreite des Schleuderdüngerstreuers so angepasst werden, dass die Düngung besonders gleichmäßig erfolgt. Beispielsweise ist es möglich, bei der Einfahrt in das Vorgewende mit einer asymmetrischen Verteilung des Streufächers eine gleichmäßigere Düngung zu erzielen.

Ein Schlepper kann dafür vorgesehen sein, den Schleuderdüngerstreuer entlang von Feldgassen zu ziehen oder zu transportieren. Der Schleuderdüngerstreuer kann ein oder zwei Schleuderscheiben umfassen, wobei die verstellbare Grenzstreueinrichtung an nur einer oder beiden Schleuderscheiben angeordnet ist. Denkbar ist auch, dass der Schleuderdüngerstreuer mehr als zwei Schleuderscheiben aufweist und dass die Grenzstreueinrichtung an einer äußeren oder den beiden äußeren Schleuderscheiben angeordnet ist. Auf der Schleuderscheibe können Schaufeln angeordnet sein, mittels derer über eine Rotationsbewegung der Schleuderscheibe der Dünger im Wesentlichen in Fahrtrichtung hinter und seitlich vom Schleuderdüngerstreuer auf dem Feld verteilt wird. Der Streufächer kann eine kreisförmige, ellipsenförmige oder eine nierenförmige Streucharakteristik aufweisen. Die Streucharakteristik des Streufächers kann eine ortsaufgelöste Verteilung der Düngermenge auf dem Feld sein. Die Arbeitsbreite kann die Breite der Streucharakteristik und/oder des Streufächers sein, insbesondere in Querrichtung zur Fahrtrichtung des Düngerstreuers.

Die Dosieröffnung kann in einer Dosiereinheit angeordnet sein, über die der Dünger aus dem Vorratsbehälter auf die Schleuderscheibe aufbringbar ist. Es ist auch denkbar, dass der Dünger mittels einer Dosierschnecke durch die Dosieröffnung förderbar ist. Die Dosiereinheit kann mit dem Vorratsbehälter über Rohrleitungen verbunden sein.

"Verstellbare Grenzstreueinrichtung" kann hier bedeuten, dass durch die Verstellung der Grenzstreueinrichtung die Streucharakteristik des Streufächers veränderbar ist. "Verstellbare Grenzstreurichtung" kann ebenso bedeuten, dass die im Wesentlichen vertikal ausgerichteten Leitflächenelemente in ihrer Position gegenüber dem Streufächer verstellbar sind. "Dass die Leitflächenelemente im Wesentlichen vertikal ausgerichtet sind" kann hier bedeuten, dass diese im Wesentlichen senkrecht zum horizontal verlaufenden Streufächer ausgebildet sind. Mit "vertikal" kann die Richtung benannt sein, die auf den Erdmittelpunkt zeigt. Die Leitflächenelemente können am oberen oder unteren Ende durch ein plattenartiges Element verbunden sein. Die Leitflächenelemente können in einem horizontalen Querschnitt im Wesentlichen tangential zur Flug- und/oder Umlenkrichtung des Düngers verlaufen. Leitflächenelemente können dabei jeweils flügelartig in den Streufächer hinein stehen.

"Dass wenigstens ein Teil der Leitflächenelemente jeweils in vertikaler Richtung mit unterschiedlichen Umlenkwinkeln ausgebildet ist" kann hier bedeuten, dass diese Leitflächenelemente jeweils in vertikaler Richtung unterschiedliche Einstellwinkel gegenüber der Flugrichtung des Düngers aufweisen. Ebenso kann dies bedeuten, dass diese Leitflächenelemente jeweils unterschiedliche Krümmungen, einen unterschiedlichen Knick oder dergleichen gegenüber der Flugrichtung des Düngers aufweisen. Die Leitflächenelemente können im horizontalen Schnitt jeweils eine Tangentialzone aufweisen, die der Schleuderscheibe zugewandt ist und die im Wesentlichen tangential zur Flugrichtung des Düngers ab der Schleuderscheibe verläuft. Die Leitflächenelemente können zur Umlenkung des Düngers im horizontalen Schnitt jeweils eine Krümmung aufweisen, ab der die Tangentialzone in eine Umlenkzone übergeht. "Dass ein Teil der Leitflächenelemente jeweils mit vertikal unterschiedlichen Umlenkwinkeln ausgebildet ist" kann hier bedeuten, dass diese Leitflächenelemente jeweils Umlenkzonen mit verschiedenen Winkeln gegenüber der Tangentialzone aufweisen.

Der Teil der Leitflächenelemente kann jeweils mit wenigstens zwei Zonen ausgebildet sein, die unterschiedliche Umlenkwinkel aufweisen. Dadurch erfolgt bei einer Verstellung der Grenzstreueinrichtung die Verstellung des Umlenkwinkels kaskadenartig in diskreten Schritten. Dadurch muss die Verstellung der Grenzstreueinrichtung weniger genau erfolgen.

Die Leitflächenelemente können zur Einstellung der Arbeitsbreite manuell oder mit einem motorischen Hubantrieb gegenüber der Schleuderscheibe höhenverstellbar sein. Durch die Höhenverstellung kommen verschiedene Bereiche der Leitflächenelemente mit dem Streufächer in Kontakt und die Arbeitsbreite kann direkt über die Höhenverstellung der Leitflächenelemente realisiert werden. Der motorische Hubantrieb kann ein Elektromotor, ein Getriebemotor, eine Hydraulik und/oder Pneumatik sein.

Die Leitflächenelemente sind zur Einstellung der Arbeitsbreite in Umfangsrichtung der Schleuderscheibe manuell oder mit einem motorischen Schwenkantrieb längsverstellbar. Dadurch, dass die Leitflächenelemente in Umfangsrichtung längsverstellbar sind, kommen diese jeweils mit dem Streufächer an unterschiedlichen Stellen in Kontakt und die Wurfweite kann dort entsprechend verändert werden. Da die Leitflächenelemente in Umfangsrichtung angeordnet sind, können diese in Abhängigkeit von ihrer Position einen unterschiedlichen Umlenkwinkel aufweisen. Durch die Längsverstellung kann die Position der einzelnen Leitflächenelemente gegenüber dem Streufächer verstellt werden. Der motorische Schwenkantrieb kann ein Elektromotor, ein Getriebemotor, eine Hydraulik oder eine Pneumatik sein.

Die Dosieröffnung kann zur Einstellung der Arbeitsbreite in der Größe und/oder in der Position manuell oder mit einem Antrieb verstellbar ausgebildet sein. Dadurch kann die Streucharakteristik des Streufächers und damit der Arbeitsbreite angepasst werden. Die Verstellung der Dosieröffnung kann durch einen Schieber oder dergleichen erfolgen. Der Antrieb kann ein Elektromotor, ein Getriebemotor, eine Hydraulik oder eine Pneumatik sein.

Der Schleuderdünger kann mit einer zweiten Schleuderscheibe ausgebildet sein und die Leitflächenelemente können zur Begrenzung einer Wurfweite der ersten Schleuderscheibe in Richtung der zweiten Schleuderscheibe ausgebildet sein. Beispielsweise können die zur zweiten Schleuderscheibe nächstliegenden Leitflächenelemente mit entsprechenden Umlenkwinkeln ausgebildet sein. "Begrenzung der Wurfweite" kann hier bedeuten, dass der Dünger durch die Leitflächenelemente umgelenkt und/oder abgebremst wird. Durch die Begrenzung der Wurfweite kann der Streufächer in Richtung der zweiten Schleuderscheibe besonders genau gesteuert werden.

Die zweite Streuscheibe kann separat von der ersten Streuscheibe abschaltbar ausgebildet sein. Dadurch können besonders asymmetrische Streufächer erzeugt werden, wobei die Arbeitsbreite gegenüber der Fahrtrichtung des Schleuderdüngerstreuers ebenfalls asymmetrisch angeordnet ist.

Darüber hinaus stellt die Erfindung mit dem Anspruch 7 ein Verfahren für einen Schleuderdüngerstreuer zur Ausbringung von Dünger auf einem Feld bereit, wobei der Dünger aus einem Vorratsbehälter mit einer Dosieröffnung auf eine erste Schleuderscheibe dosiert und von der ersten Schleuderscheibe in einem Streufächer auf dem Feld verteilt wird, dadurch gekennzeichnet, dass zur Verstellung der Arbeitsbreite in einem Teilbreitenstreubetrieb innerhalb des Feldes Leitflächenelemente einer Grenzstreueinrichtung teilweise oder vollständig in den Streufächer eingefahren werden.

Dadurch, dass die Grenzstreueinrichtung nicht nur im Grenzstreubetrieb, sondern auch im Teilbreitenstreubetrieb innerhalb des Feldes genutzt wird, kann der Streufächer beispielsweise bei der Ein- und Ausfahrt ins Vorgewende oder bei der Umfahrung von Hindernissen mit der Grenzstreueinrichtung auf einfache Art und Weise angepasst werden. Mittels der Grenzstreueinrichtung kann der Streufächer so angepasst werden, dass eine besonders gleichmäßige Düngung im Teilbreitenstreubetrieb gewährleistet ist.

Der Teilbreitenstreubetrieb kann für Übergangsbereiche innerhalb des Feldes vorgesehen sein, an denen Feldgassen mit unterschiedlicher Richtung zusammen- oder auseinanderlaufen. Ebenso ist denkbar, dass der Teilbreitenstreubetrieb für eine korrigierte Düngerverteilung benutzt wird, um einen gleichmäßigen Pflanzenwuchs zu gewährleisten. Beispielsweise kann dies erforderlich sein, falls auf bestimmten Feldbereichen eine erhöhte oder verminderte Düngung auf Basis von Ernteerträgen notwendig ist.

Im Teilbreitenstreubetrieb kann die Dosierung des Düngers reduziert werden. Dadurch kann die Wurfweite und die Düngermenge auf den geringeren Bedarf im Teilbreitenstreubetrieb angepasst werden.

Wenigstens ein Teil der Leitflächenelemente kann zur Umlenkung des Düngers unterschiedliche Umlenkwinkel entlang der Höhe aufweisen und zur Verstellung der Arbeitsbreite höhenverstellt werden. Dadurch kann die Arbeitsbreite und der Düngerbedarf gleichzeitig angepasst werden.

Der Teil der Leitflächenelemente kann entlang der Höhe wenigstens zwei Zonen mit jeweils unterschiedlichen Umlenkwinkeln aufweisen und zur Verstellung der Arbeitsbreite zonenweise in den Streufächer ein- oder ausgefahren werden. Dadurch erfolgt die Verstellung der Arbeitsbreite bzw. des Streufächers in diskreten Schritten und die Höhenverstellung kann weniger präzise und damit kostengünstiger ausgelegt werden.

Die Leitflächenelemente werden im Teilbreitenstreubetrieb zur Einstellung der Arbeitsbreite in Umfangsrichtung der ersten Schleuderscheibe längsverstellt. Durch die Verstellung in Umfangsrichtung können unterschiedliche Bereiche des Streufächers durch die Grenzstreueinrichtung umgelenkt werden und es kann eine besonders flexible Verstellung der Streucharakteristik erfolgen.

Die Dosieröffnung kann zur Einstellung der Arbeitsbreite in der Größe und/oder in der Position gegenüber der ersten Schleuderscheibe verstellt werden. Dadurch kann die Düngermenge besonders einfach an den Bedarf angepasst werden.

Eine zweite Schleuderscheibe des Schleuderdüngerstreuers kann im Teilbreitenstreubetrieb abgeschaltet werden und die Leitflächenelemente können in den Streufächer der ersten Schleuderscheibe derart eingefahren werden, dass eine Wurfweite zur zweiten Schleuderscheibe hin begrenzt wird. "Dass die Wurfweite zur zweiten Schleuderscheibe hin begrenzt wird" kann hier bedeuten, dass der Dünger abgebremst und/oder umgelenkt wird. Dadurch kann eine besonders asymmetrische Verteilung des Düngers bzw. der Arbeitsbreite erzeugt werden. Dadurch kann auch ein Bereich zwischen zwei sehr spitzwinklig zueinander laufenden Fahrgassen besonders gleichmäßig gedüngt werden.

Es versteht sich, dass das Verfahren auch die zuvor in Bezug auf die Ansprüche 1-6 beschriebenen Merkmale einzeln oder in beliebigen Kombinationen, solange es mit dem Schutzumfang der Verfahrensansprüche 7-12 übereinstimmt, aufweisen kann.

Weitere Merkmale und Vorteile der Erfindung werden nachfolgend anhand der in den Figuren dargestellten Ausführungsbeispiele beschrieben. Dabei zeigt:
- Fig. 1: ein Ausführungsbeispiel eines Schleuderdüngerstreuers mit einer Grenzstreueinrichtung in einer perspektivischen Ansicht;
- Fig. 2: die Schleuderscheibe und ein Leitflächenelement des Schleuderdüngerstreuers aus der Fig. 1 als Detail in einer Draufsicht;
- Fig. 3a - 3c: der Schleuderdüngerstreuer aus der Fig. 1 mit unterschiedlichen Höheneinstellungen der Leitflächenelemente in einer seitlichen Ansicht;
- Fig. 4: ein weiteres Ausführungsbeispiel eines Schleuderdüngerstreuers mit längsverstellbaren Leitflächenelementen in einer Draufsicht;
- Fig. 5: die Düngung eines Feldes mit einem Schleuderdüngerstreuers bei der Einfahrt in eine Vorgewende ohne den Einsatz der Grenzstreueinrichtung in einer Draufsicht;
- Fig. 6: den Einsatz der Grenzstreueinrichtung im Teilbreitenstreubetrieb bei der Einfahrt in das Vorgewende in einer Draufsicht; und
- Fig. 7: den Einsatz der Grenzstreueinrichtung im Teilbreitenstreubetrieb bei der Einfahrt in das Vorgewende in einer Draufsicht, wobei die Leitflächenelementen einen vertikal unterschiedliche Umlenkwinkel aufweisen.

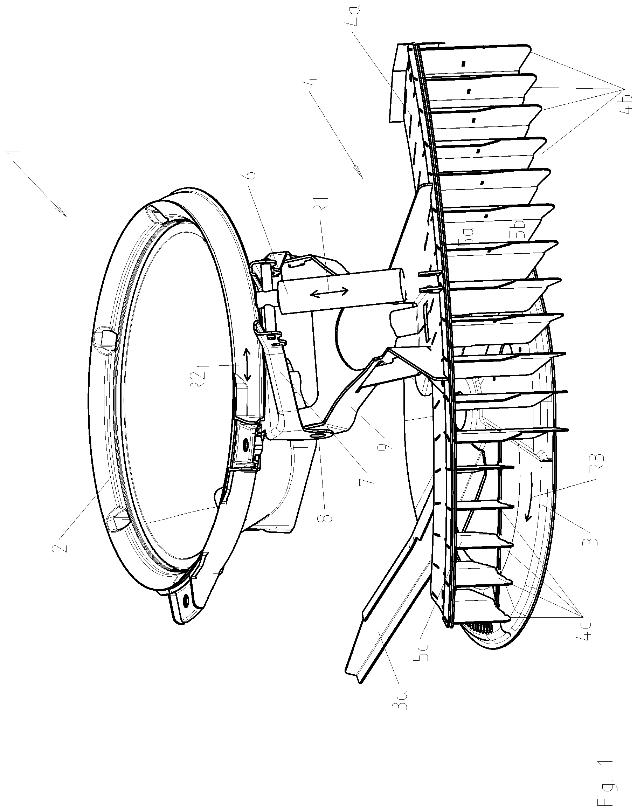

In der Fig. 1 ist ein Ausführungsbeispiel eines Schleuderdüngerstreuers 1 mit einer Grenzstreueinrichtung 4 in einer perspektivischen Ansicht dargestellt. Bei der Düngung wird der Dünger aus dem Vorratsbehälter 2 über eine hier nicht dargestellte Dosieröffnung auf die Schleuderscheibe 3 dosiert. Durch deren Rotation in der Drehrichtung R₃ wirken Fliehkräfte, wodurch der Dünger nach außen getrieben und über die Wurfarme 3a auf das Feld geschleudert wird.

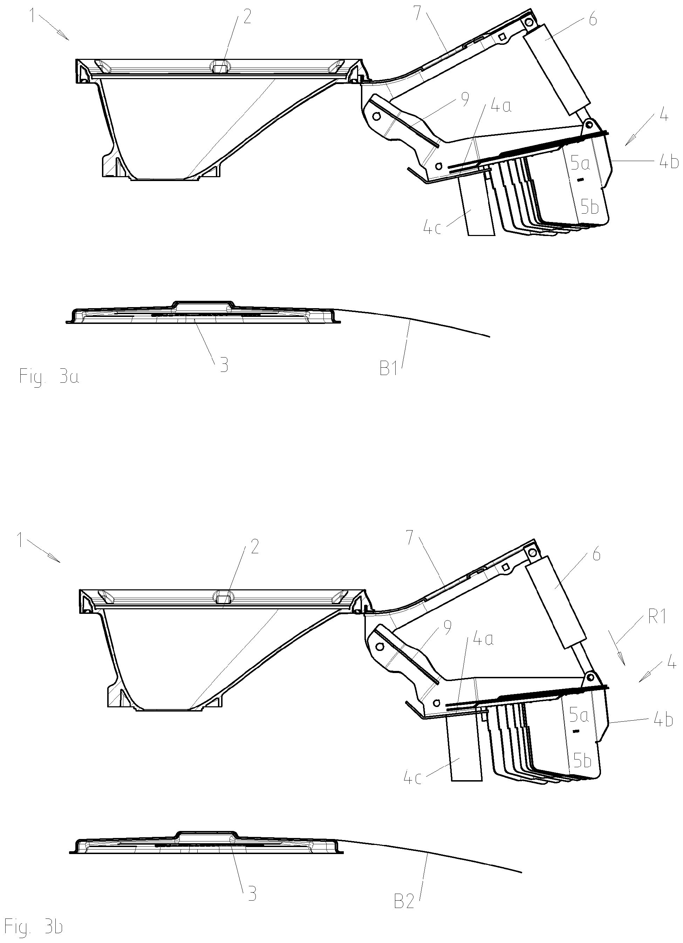

Zu sehen ist weiterhin die Grenzstreueinrichtung 4 mit den Leitflächenelementen 4b und 4c. Die Leitflächenelemente 4b, 4c verlaufen im Wesentlichen vertikal und stehen kammartig nach unten von der Blechplatte 4a ab. Des Weiteren ist zu sehen, dass ein Teil der Leitflächenelemente 4b mit zwei Zonen 5a und 5b mit jeweils unterschiedlichem Umlenkwinkel ausgebildet ist. Die Zonen 5a und 5b sind vertikal übereinander angeordnet und schließen über einen Übergangsbereich aneinander an. Wie nachfolgend anhand der Fig. 3a - 3c genauer beschrieben, werden die Zonen 5a und 5b zur Einstellung der Arbeitsbreite mit einer Höhenverstellung unterschiedlich weit in den Streufächer der Schleuderscheibe 3 eingefahren.

Darüber hinaus ist zu sehen, dass die Grenzstreueinrichtung 4 einen weiteren Teil kürzere Leitflächenelemente 4c mit nur einer Zone 5c aufweist. Diese Leitflächenelemente 4c wirken nur zusammen mit der oberen Zone 5a der Leitflächenelemente 4b. Falls lediglich die unteren Zonen 5b der Leitflächenelemente 4b in den Streufächer eintauchen, so wird der Dünger unterhalb der Leitflächenelemente 4c nicht umgelenkt.

Die Höhenverstellung der Leitflächenelemente 4b, 4c erfolgt über einen motorischen Hubantrieb 6, der an der Oberseite mit dem in Umfangsrichtung R₂ der Schleuderscheibe verstellbaren Träger 7 verbunden ist. An der Unterseite ist der Hubantrieb 6 mit der Blechplatte 4a der Grenzstreueinrichtung 4 verbunden, von der die Leitflächenelemente 4b, c kammartig abstehen. Über eine Verlängerung bzw. Verkürzung des Hubantriebs 6 in Richtung R₁ kann die Grenzstreueinrichtung 4 und damit die Leitflächenelemente 4b, 4c höhenverstellt werden. Um eine möglichst stabile und genaue Führung der Grenzstreueinrichtung 4 zu ermöglichen, ist diese über den schwenkbaren Träger 9 mit dem Gelenk 8 verbunden. Dadurch werden die Leitflächenelemente 4b, 4c bei der Höhenverstellung in einem Radius um das Gelenk 8 in vertikaler Richtung geschwenkt. Das Gelenk 8 ist ebenfalls mit dem längsverstellbaren Träger 7 verbunden.

Die Längsverstellung der Leitflächenelemente 4b, 4c in Umfangsrichtung R₂ der Schleuderscheibe 3 erfolgt darüber, dass der Träger 7 über eine hier nicht dargestellte Schiene entlang der Berandung des Vorratsbehälters 2 verschiebbar ist. Dadurch greifen die Leitflächenelemente 4b, 4c in unterschiedliche Bereiche des Streufächers ein.

Durch die Höhen- und Längsverstellung der Leitflächenelemente kann im Teilbreitenstreubetrieb der Streufächer besonders gut an die gewünschte Streucharakteristik angepasst werden. Dadurch ist die Düngerverteilung auf dem Feld besonders gleichmäßig.

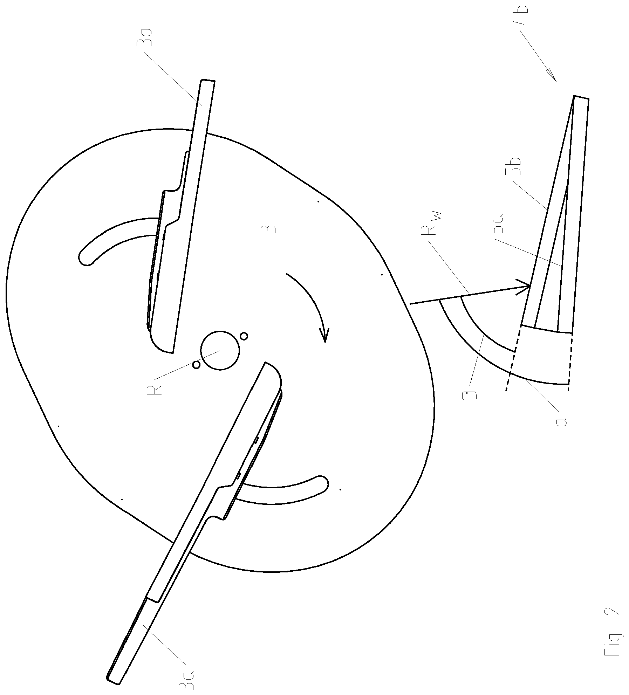

In der Fig. 2 ist die Schleuderscheibe und ein einzelnes Leitflächenelement 4b des Schleuderdüngerstreuers 1 aus der Fig. 1 als Detail in einer Draufsicht gezeigt. Zu sehen ist die Schleuderscheibe 3 mit den Wurfarmen 3a, die um die Achse 3 rotiert. Dadurch wird der Dünger in der Wurfrichtung R_{W} von der Schleuderscheibe 3 auf das Leitflächenelement 4b geschleudert. Zu sehen ist, dass die Zonen 5a und 5b jeweils einen unterschiedlichen Winkel α und β gegenüber der Wurfrichtung R_{W} aufweisen. Je nach Höheneinstellung des Leitflächenelements 4b (in der Fig. 2 senkrecht zur Zeichenebene) wird dann der Dünger durch die Zone 5a oder die Zone 5b umgelenkt, also mit unterschiedlichen Umlenkwinkeln. Durch die Höheneinstellung ist eine besonders einfache Anpassung der Streucharakteristik des Schleuderdüngerstreuers möglich.

In den Fig. 3a - 3c ist der Schleuderdüngerstreuer 1 mit jeweils unterschiedlicher Höheneinstellung der Leitflächenelemente 4b, 4c in einer seitlichen Ansicht dargestellt. In der Fig. 3a ist zu sehen, dass der Hubantrieb 6 komplett eingefahren ist und dass damit die Grenzstreueinrichtung 4 mit der Blechplatte 4a und den Leitflächenelementen 4b soweit wie möglich nach oben geschwenkt ist. Dadurch greifen die Leitflächenelemente 4b und 4c nicht in die Wurfbahn B₁ des Düngers ein. Es erfolgt also keine Beeinflussung des Streufächers durch die Grenzstreueinrichtung 4.

In der Fig. 3b ist der Hubantrieb 6 gegenüber der Fig. 3a soweit in die Richtung R₁ verfahren, dass die Grenzstreueinrichtung 4 in einer mittleren Position ist. Hierbei greifen die unteren Zonen 5b der Leitflächenelemente 4b in die Wurfbahn B₂ des Düngers ein. Demgegenüber greifen die oberen Zonen 5a der Leitflächenelemente 4b sowie die anderen Leitflächenelemente 4c nicht in die Wurfbahn B₂ ein. Dadurch kann die Wurfbahn B₂ mit dem kleineren Umlenkwinkel β aus der Fig. 2 umgelenkt werden.

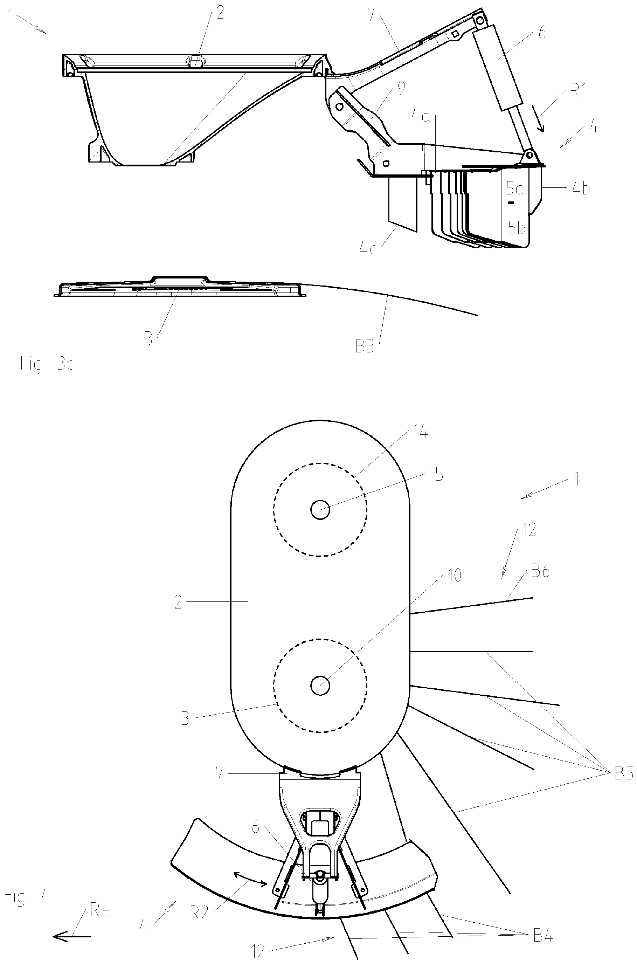

In der Fig. 3c ist der Hubantrieb 6 gegenüber den Fig. 3a und 3b maximal ausgefahren, so dass die Grenzstreueinrichtung 4 und damit die Leitflächenelemente 4b, 4c in einer unteren Position sind. Dadurch greifen alle Leitflächenelemente 4b, 4c in die Wurfbahn B₃ des Düngers ein. Folglich wird der eine Teil des Streufächers mit den Zonen 5a der Leitflächenelemente 4b umgelenkt und erfährt den größeren Umlenkwinkel α entsprechend der Fig. 2. Des Weiteren wird der andere Teil des Streufächers mit den kürzeren Leitflächenelement 4c umgelenkt.

Durch die Höhenverstellung der Leitflächenelemente 4b, 4c kann also die Streucharakteristik des Streufächers so eingestellt werden, dass eine besonders gleichmäßige Düngung möglich ist.

In der Fig. 4 ist ein weiteres Ausführungsbeispiel eines Schleuderdüngerstreuers 1 mit zwei Schleuderscheiben 3, 14 in einer Draufsicht dargestellt. Zu sehen ist, dass der Vorratsbehälter 2 hier eine längliche Form aufweist und der Dünger durch die Dosieröffnung 10 auf die erste Schleuderscheibe 3 und durch eine zweite Dosieröffnung 15 auf die zweite Schleuderscheibe 14 gelangt. Die Schleuderscheiben 3 und 14 rotieren gegenläufig, so dass sich ohne zugeschaltete Grenzstreueinrichtung eine in etwa nierenförmige Streucharakteristik des Streufächers ergibt.

Zu sehen ist in der Fig. 4, dass die Schleuderscheibe 14 abgeschaltet ist, um gegenüber der Fahrtrichtung R_{F} eine besondere asymmetrische Streucharakteristik zu erzeugen. Des Weiteren ist zu sehen, dass im Bereich der Schleuderscheibe 3 die Grenzstreueinrichtung 4 angeordnet ist, die baugleich mit der Grenzstreueinrichtung der Fig. 1 - 3c ist. Diese kann über den Hubantrieb 6 höhenverstellt werden und in der Umfangsrichtung R₂ durch Verschieben des Trägers 7 längsverstellt werden. Dadurch kann sie mehr oder weniger in den Streufächer 12 eingefahren werden. Im vorliegenden Beispiel der Fig. 4 ist die Grenzstreueinrichtung 4 soweit in den Streufächer 12 eingefahren, dass die Wurfbahnen B₄ in Bezug auf die Fahrtrichtung R_{F} weiter nach hinten abgelenkt werden. Dadurch ergibt sich in diesem Bereich ein schmalerer Streufächer 12. Die Wurfbahnen B₅ - B₆ bleiben dabei von der Grenzstreueinrichtung 4 unbeeinflusst.

Darüber hinaus ist denkbar, dass die Grenzstreueinrichtung 4 soweit in den Streufächer 12 längsverstellt wird, dass auch die Bereiche mit den Flugbahnen B₅ umgelenkt werden. Im Extremfall kann sogar die Wurfweite der zur zweiten Schleuderscheibe 14 nächstliegenden Wurfbahn B₆ umgelenkt werden, so dass möglichst wenig Dünger im eigentlichen Wurfbereich der hier abgeschalteten Schleuderscheibe 14 zu liegen kommt. Denkbar ist, dass dazu ein spezielles Leitflächenelement mit umgekehrter Umlenkrichtung an der Grenzstreueinrichtung 4 angeordnet ist.

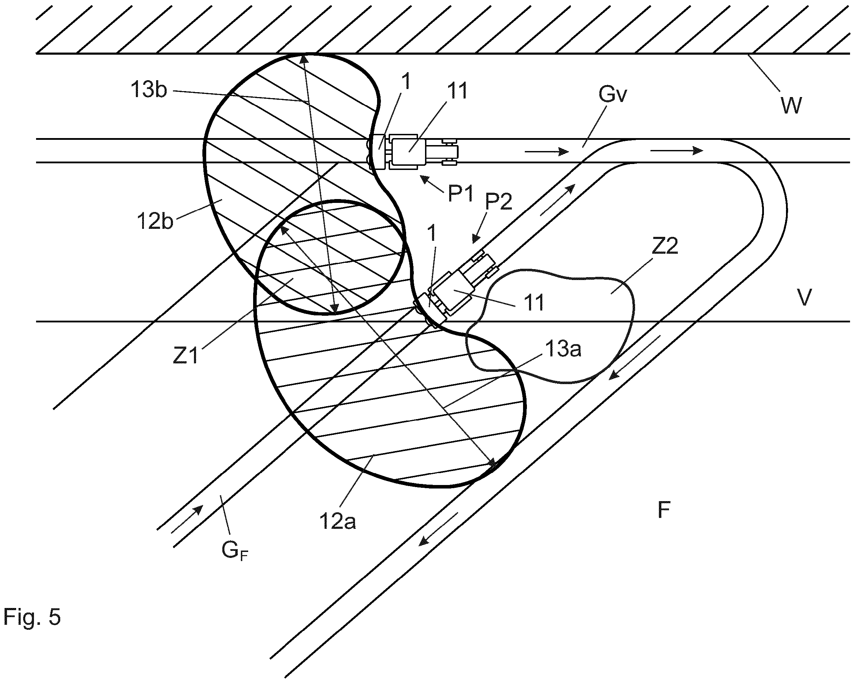

In der Fig. 5 ist die Düngung des Feldes F mit dem Schleuderdüngerstreuer 1 aus der Fig. 4 in einer Draufsicht dargestellt. Beispielsweise wird hier ein Schleuderdüngerstreuer 1 mit einer Grenzstreueinrichtung 4 nach den Ausführungsbeispielen aus den Fig. 1 - 4 eingesetzt. Zu sehen ist, dass im Bereich des Vorgewendes V der Schlepper 11 mit dem Schleuderdüngerstreuer 1 in der Fahrgasse G_{V} parallel zur Feldgrenze W fährt. Dabei ist die Grenzstreueinrichtung soweit wie möglich in den Streufächer der linken Schleuderscheibe hinein geschwenkt, so dass der Streufächer 12b asymmetrisch mit der Arbeitsbreite 13b verläuft. Dabei wird die Wurfweite in Richtung der Feldgrenze W verringert und ist scharf begrenzt. Der in Fahrtrichtung rechts neben der Fahrgasse G_{V} liegende Abschnitt des Vorgewendes V wird demgegenüber im Wesentlichen mit der im Feld vorliegenden Streucharakteristik gedüngt.

Darüber hinaus ist zu sehen, dass bei der anschließenden Fahrt in der Fahrgasse G_{F} im zentralen Feld die Grenzstreueinrichtung vollständig aus dem Streufächer 12a herausgefahren ist und somit die Streucharakteristik symmetrisch zur Fahrtrichtung ist. Dadurch ergibt sich eine Arbeitsbreite 13a, die im Wesentlichen den zweifachen Abstand der parallelen Fahrgassen G_{F} überstreicht.

Darüber hinaus ist zu sehen, dass sich an den dargestellten Positionen P₁, P₂ des Schleuderdüngerstreuers 1 ein Überlapp der Streufächer 12a und 12b im Bereich der Zone Z₁ ergibt. Dadurch kommt es in der Zone Z₁ zu einer Überdüngung. Würde man nun bei der Einfahrt des Schleuderdüngerstreuers 1 in das Vorgewende V die Düngung abschalten, so ergäbe sich im Bereich der Zone Z₂ eine Unterdüngung.

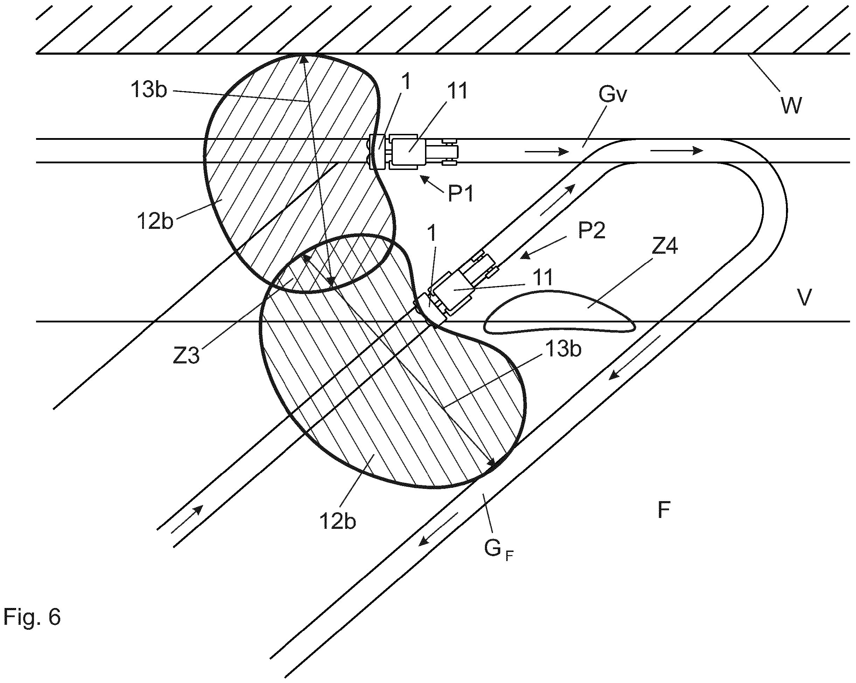

Um dies nun zu verhindern, wird in einem Teilbreitenstreubetrieb nach Fig. 6 bei der Einfahrt des Schleuderdüngerstreuers 1 in das Vorgewende V an der Position P₂ eine hier nicht im Detail dargestellte Grenzstreueinrichtung in den Streufächer eingefahren. Dadurch weist der Schleuderdüngerstreuer 1 den gleichen Streufächer 12b auf, wie beim Grenzstreubetrieb entlang der Feldgrenze W.

Dadurch ergibt sich eine kleinere Überlappungszone Z₃ der beiden Verteilungen an der Position P₁ und P₂.

Allerdings kann es nun in seltenen Fällen dazu kommen, dass in der Zone Z3 eine leichte Unterdüngung und in der Zone Z₄ eine leichte Überdüngung vorliegt.

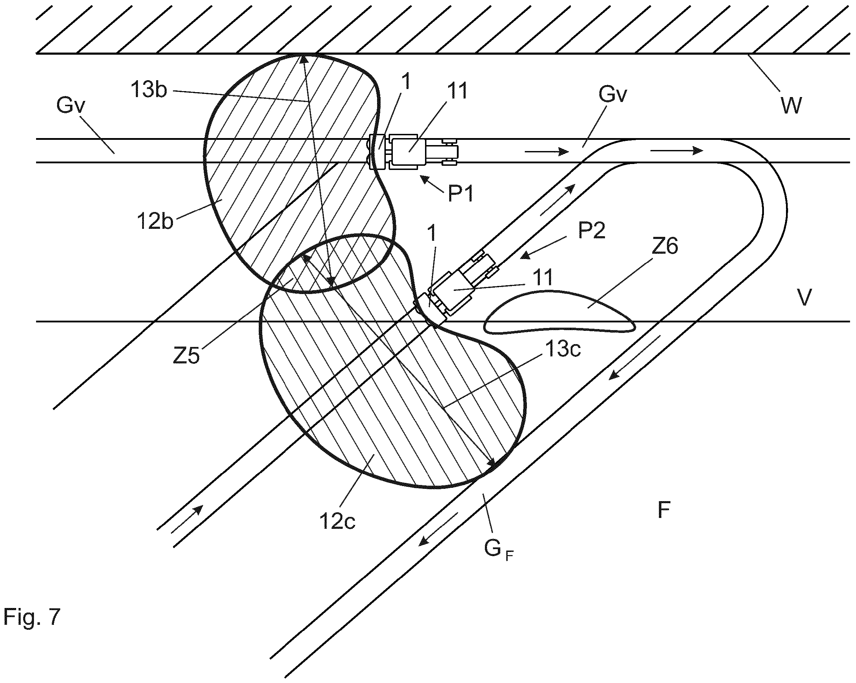

Um dies zu vermeiden, wird im Teilbreitenstreubetrieb nach der Fig. 7 die Grenzstreueinrichtung 4 entsprechend der Fig. 3b soweit nach oben verfahren, dass nur die unteren Zonen 5b der Leitflächen 4b in den Streufächer der Schleuderscheiben 3 hineinragen. Dadurch wird an der Position P₂ ein etwas weniger asymmetrischer Streufächer 12c mit der Arbeitsbreite 13c erzeugt. Dieser überlappt sich mit dem Streufächer 12b im Grenzstreubetrieb an der Position P₁ derart, dass in den Zonen Z₅ und Z₆ genau die richtige Düngermenge abgelegt wird. Dadurch kommt es in keiner dieser Zonen zu einer Über- oder Unterdüngung.

Denkbar ist auch, dass im Teilbreitenstreubetrieb der Fig. 6 und 7 die Dosierung des Düngers durch eine Verstellung der Dosieröffnung reduziert wird.

Der Schleuderdüngerstreuer wird mit den Verfahren in den Fig. 6 und 7 im Teilbreitenstreubetrieb eingesetzt, bei dem innerhalb des Feldes F die Leitflächenelemente 4b, 4c der Grenzstreueinrichtung teilweise oder vollständig in den Streufächer eingefahren werden. Dadurch wird die Arbeitsbreite angepasst und die Düngung erfolgt besonders gleichmäßig.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind, solange diese mit dem Schutzumfang der Ansprüche 1-12 übereinstimmen.

## Patentansprüche

1. Schleuderdüngerstreuer (1) mit einem Vorratsbehälter (2) für Dünger, einer ersten Schleuderscheibe (3) zur Verteilung des Düngers auf einem Feld (F) in einem Streufächer (12), einer Dosieröffnung (10) zur Dosierung des Düngers auf die erste Schleuderscheibe (3) und mit einer verstellbaren Grenzstreueinrichtung (4) mit im Wesentlichen vertikal ausgerichteten Leitflächenelementen (4b - c) zur Umlenkung des Düngers, wobei wenigstens ein Teil der Leitflächenelemente (4b) zur Einstellung der Arbeitsbreite (13a - c) eines Teilbreitenstreubetriebs jeweils in vertikaler Richtung mit unterschiedlichen Umlenkwinkeln (α, β) ausgebildet ist, **dadurch gekennzeichnet, dass** die Leitflächenelemente (4b) zur Einstellung der Arbeitsbreite (13a - c) in Umfangsrichtung (R₂) der Schleuderscheibe (3) manuell oder mit einem motorischen Schwenkantrieb längsverstellbar sind.

2. Schleuderdüngerstreuer (1) nach Anspruch 1, wobei der Teil der Leitflächenelemente (4b) jeweils mit wenigstens zwei Zonen (5a, 5b) ausgebildet ist, die unterschiedliche Umlenkwinkel (α, β) aufweisen.

3. Schleuderdüngerstreuer (1) nach Anspruch 1 oder 2, wobei die Leitflächenelemente (4b) zur Einstellung der Arbeitsbreite (13a - c) manuell oder mit einem motorischen Hubantrieb (6) gegenüber der Schleuderscheibe (3) höhenverstellbar sind.

4. Schleuderdüngerstreuer (1) nach wenigstens einem der vorangegangenen Ansprüche, wobei die Dosieröffnung (10) zur Einstellung der Arbeitsbreite (13a - c) in der Größe und/oder in der Position manuell oder mit einem Antrieb verstellbar ausgebildet ist.

5. Schleuderdüngerstreuer (1) nach wenigstens einem der vorangegangenen Ansprüche, wobei der Schleuderdüngerstreuer (1) mit einer zweiten Schleuderscheibe (14) ausgebildet ist und die Leitflächenelemente (4b) zur Begrenzung einer Wurfweite der ersten Schleuderscheibe (3) in Richtung zur zweiten Schleuderscheibe (14) ausgebildet sind.

6. Schleuderdüngerstreuer nach Anspruch 5, wobei die zweite Streuscheibe (14) separat von der ersten Streuscheibe (3) abschaltbar ausgebildet ist.

7. Verfahren zur Ausbringung von Dünger auf einem Feld (F) mit einem Schleuderdüngerstreuer nach einem der Ansprüche 1-6, wobei der Dünger aus einem Vorratsbehälter (2) mit einer Dosieröffnung (10) auf eine erste Schleuderscheibe (3) dosiert und von der ersten Schleuderscheibe (3) in einem Streufächer (12) auf dem Feld (F) verteilt wird, wobei zur Verstellung der Arbeitsbreite (13a - c) in einem Teilbreitenstreubetrieb innerhalb des Feldes (F) Leitflächenelemente (4b - c) einer Grenzstreueinrichtung (4) teilweise oder vollständig in den Streufächer (12) eingefahren werden, **dadurch gekennzeichnet, dass** die Leitflächenelemente (4b - c) im Teilbreitenstreubetrieb zur Einstellung der Arbeitsbreite (13) in Umfangsrichtung (R₂) der ersten Schleuderscheibe (3) längsverstellt werden.

8. Verfahren nach wenigstens einem der Ansprüche 7, wobei im Teilbreitenstreubetrieb die Dosierung des Düngers reduziert wird.

9. Verfahren nach Anspruch 7 oder 8, wobei wenigstens ein Teil der Leitflächenelemente (4b) zur Umlenkung des Düngers unterschiedliche Umlenkwinkel (α, β) entlang der Höhe aufweist und zur Verstellung der Arbeitsbreite höhenverstellt wird.

10. Verfahren nach Anspruch 9, wobei der Teil der Leitflächenelemente (4b) entlang der Höhe wenigstens zwei Zonen (5a, 5b) mit jeweils unterschiedlichem Umlenkwinkel (α, β) aufweist und zur Verstellung der Arbeitsbreite (13) zonenweise in den Streufächer (12) ein- oder ausgefahren wird.

11. Verfahren nach wenigstens einem der Ansprüche 7 - 10, wobei die Dosieröffnung (10) zur Einstellung der Arbeitsbreite (13) in der Größe und/oder in der Position gegenüber der ersten Schleuderscheibe (3) verstellt wird.

12. Verfahren nach wenigstens einem der Ansprüche 7 - 11, wobei eine zweite Schleuderscheibe (14) des Schleuderdüngerstreuers (1) im Teilbreitenstreubetrieb abgeschaltet wird und die Leitflächenelemente (4b - c) in den Streufächer (12) der ersten Schleuderscheibe (3) derart eingefahren werden, dass eine Wurfweite zur zweiten Schleuderscheibe (14) hin begrenzt wird.

## Claims

1. Centrifugal fertilizer spreader (1) having a storage container (2) for fertilizer, having a first centrifugal disc (3) for spreading the fertilizer on a field (F) in a spreading fan (12), having a metering opening (10) for metering the fertilizer onto the first centrifugal disc (3) and having an adjustable boundary spreading device (4) with substantially vertically oriented guide surface elements (4b - c) for deflecting the fertilizer, wherein at least a part of the guide surface elements (4b) is, for the adjustment of the working width (13a - c) of a part-width spreading operation, formed in each case with different deflecting angles (α, β) in a vertical direction, **characterized in that** the guide surface elements (4b) are, for the adjustment of the working width (13a - c), adjustable in length in the circumferential direction (R₂) of the centrifugal disc (3) manually or by means of a motor-powered pivot drive.

2. Centrifugal fertilizer spreader (1) according to Claim 1, wherein the part of the guide surface elements (4b) is formed in each case with at least two zones (5a, 5b) which have different deflecting angles (α, β).

3. Centrifugal fertilizer spreader (1) according to Claim 1 or 2, wherein the guide surface elements (4b) are, for the adjustment of the working width (13a - c), adjustable in height relative to the centrifugal disc (3) manually or by means of a motor-powered strokegenerating drive (6).

4. Centrifugal fertilizer spreader (1) according to at least one of the preceding claims, wherein the metering opening (10) is, for the adjustment of the working width (13a - c), designed to be adjustable in size and/or in position manually or by means of a drive.

5. Centrifugal fertilizer spreader (1) according to at least one of the preceding claims, wherein the centrifugal fertilizer spreader (1) is formed with a second centrifugal disc (14), and the guide surface elements (4b) are designed to limit a throwing width of the first centrifugal disc (3) in the direction of the second centrifugal disc (14).

6. Centrifugal fertilizer spreader according to Claim 5, wherein the second spreading disc (14) is designed to be deactivatable separately from the first spreading disc (3).

7. Method for dispensing fertilizer on a field (F) by means of a centrifugal fertilizer spreader according to any of Claims 1-6, wherein the fertilizer is metered from a storage container (2) onto a first centrifugal disc (3) by means of a metering opening (10) and is scattered by the first centrifugal disc (3) on the field (F) in a spreading fan (12), wherein, for the adjustment of the working width (13a - c) in a part-width spreading operation within the field (F), guide surface elements (4b - c) of a boundary spreading device (4) are partially or fully moved into the spreading fans (12), **characterized in that** the guide surface elements (4b - c) are, in the part-width spreading operation, adjusted in length in the circumferential direction (R₂) of the first centrifugal disc (3) in order to adjust the working width (13).

8. Method according to at least one of Claims 7, wherein the dosing of the fertilizer is reduced in the part-width spreading operation.

9. Method according to Claim 7 or 8, wherein at least a part of the guide surface elements (4b) for deflecting the fertilizer has different deflecting angles (α, β) along the height, and is adjusted in height in order to adjust the working width.

10. Method according to Claim 9, wherein the part of the guide surface elements (4b) has at least two zones (5a, 5b) with in each case different deflecting angles (α, β) along the height, and is moved into or out of the spreading fans (12) in zone-wise fashion in order to adjust the working width (13).

11. Method according to at least one of Claims 7 - 10, wherein the metering opening (10) is adjusted in size and/or in position relative to the first centrifugal disc (3) in order to adjust the working width (13).

12. Method according to at least one of Claims 7 - 11, wherein a second centrifugal disc (14) of the centrifugal fertilizer spreader (1) is deactivated in the part-width spreading operation, and the guide surface elements (4b - c) are moved into the spreading fans (12) of the first centrifugal disc (3) such that a throwing width is limited towards the second centrifugal disc (14).

## Revendications

1. Épandeur d'engrais centrifuge (1) comprenant un réservoir (2) pour l'engrais, un premier disque centrifuge (3) pour répartir l'engrais sur un champ (F) dans une plage d'épandage (12), une ouverture de dosage (10) pour doser l'engrais sur le premier disque centrifuge (3) et un dispositif de limite d'épandage réglable (4) comprenant des éléments de surface de guidage (4b-c) orientés essentiellement verticalement pour dévier l'engrais, au moins une partie des éléments de surface de guidage (4b) étant prévus pour l'ajustement de la largeur de travail (13a-c) d'un mode d'épandage en largeur partielle à chaque fois dans la direction verticale avec des angles de déviation différents (α, β),
**caractérisé en ce que**
les éléments de surface de guidage (4b) pour l'ajustement de la largeur de travail (13a-c) peuvent être réglés en longueur manuellement ou avec un entraînement de pivotement motorisé dans la direction périphérique (R₂) du disque centrifuge (3).

2. Épandeur d'engrais centrifuge (1) selon la revendication 1, dans lequel la partie des éléments de surface de guidage (4b) est réalisée à chaque fois avec au moins deux zones (5a, 5b) qui présentent des angles de déviation différents (α, β).

3. Épandeur d'engrais centrifuge (1) selon la revendication 1 ou 2, dans lequel les éléments de surface de guidage (4b) peuvent être réglés en hauteur par rapport au disque centrifuge (3) manuellement ou avec un entraînement de levage motorisé (6) pour l'ajustement de la largeur de travail (13a-c).

4. Épandeur d'engrais centrifuge (1) selon au moins l'une quelconque des revendications précédentes, dans lequel l'ouverture de dosage (10) pour l'ajustement de la largeur de travail (13a-c) est réalisée de manière à en ce que sa taille et/ou sa position puissent être réglées manuellement ou avec un entraînement.

5. Épandeur d'engrais centrifuge (1) selon au moins l'une quelconque des revendications précédentes, l'épandeur d'engrais centrifuge (1) étant réalisé avec un deuxième disque centrifuge (14) et les éléments de surface de guidage (4b) étant réalisés pour limiter une largeur de jet du premier disque centrifuge (3) dans la direction du deuxième disque centrifuge (14).

6. Épandeur d'engrais centrifuge selon la revendication 5, dans lequel le deuxième disque d'épandage (14) est réalisé de manière à pouvoir être arrêté séparément du premier disque d'épandage (3).

7. Procédé pour répandre de l'engrais sur un champ (F) avec un épandeur d'engrais centrifuge selon l'une quelconque des revendications 1 à 6, l'engrais étant dosé à partir d'un réservoir (2) avec une ouverture de dosage (10) sur un premier disque centrifuge (3) et étant réparti sur le champ (F) dans une plage d'épandage (12) depuis le premier disque centrifuge (3), des éléments de surface de guidage (4b-c) d'un dispositif de limite d'épandage (4) étant rentrés partiellement ou complètement dans la plage d'épandage (12) de manière à régler la largeur de travail (13a-c) dans un mode d'épandage en largeur partielle à l'intérieur du champ (F),
**caractérisé en ce que**
les éléments de surface de guidage (4b-c) sont réglés en longueur en mode d'épandage en largeur partielle afin d'ajuster la largeur de travail (13) dans la direction périphérique (R₂) du premier disque centrifuge (3).

8. Procédé selon au moins l'une des revendications 7, dans lequel en mode d'épandage en largeur partielle, le dosage de l'engrais est réduit.

9. Procédé selon la revendication 7 ou 8, dans lequel au moins une partie des éléments de surface de guidage (4b), pour la déviation de l'engrais, présente des angles de déviation différents (α, β) le long de la hauteur et est réglée en hauteur pour régler la largeur de travail.

10. Procédé selon la revendication 9, dans lequel la partie des éléments de surface de guidage (4b) présente le long de la hauteur au moins deux zones (5a, 5b) ayant chacune un angle de déviation différent (α, β) et est rentrée ou sortie dans la plage d'épandage (12) pour le réglage de la largeur de travail (13) par zone.

11. Procédé selon au moins l'une quelconque des revendications 7 à 10, dans lequel l'ouverture de dosage (10) pour l'ajustement de la largeur de travail (13) est réglée en taille et/ou en position par rapport au premier disque centrifuge (3).

12. Procédé selon au moins l'une quelconque des revendications 7 à 11, dans lequel un deuxième disque centrifuge (14) de l'épandeur d'engrais centrifuge (1) est arrêté en mode d'épandage en largeur partielle et les éléments de surface de guidage (4b-c) sont rentrés dans la plage d'épandage (12) du premier disque centrifuge (3) de telle sorte qu'une largeur de jet soit limitée vers le deuxième disque centrifuge (14).
